# EUROPÄISCHE PATENTSCHRIFT

(11) **EP 1 970 396 B1**
(45) Veröffentlichungstag und Bekanntmachung des Hinweises auf die Patenterteilung: **09.04.2014**
(21) Anmeldenummer: 08100345.1
(22) Anmeldetag: 11.01.2008
(51) Int. Cl.: C08G 77/46, C08G 77/34

(54) **Verfahren zum Aufbereiten von SiC-gebundenen Polyethersiloxanen**
Method for preparing SIC-bound polyethersiloxanes
Procédé destiné à la préparation de polyéthersiloxanes liés par SiC

(30) Priorität: 14.03.2007 DE 102007012241
(43) Veröffentlichungstag der Anmeldung: 17.09.2008
(73) Patentinhaber: Evonik Degussa GmbH, 45128 Essen (DE)
(72) Erfinder: Neumann, Thomas, 44869, Bochum (DE); Klein, Klaus-Dieter, 45481, Muelheim (DE)

(56) Entgegenhaltungen:
- EP-A1- 0 513 645

## Beschreibung

Die Erfindung betrifft ein Verfahren zum Aufbereiten von Polyoxyalkylen-Polysiloxan-Blockmischpolymerisaten oder Alkylpolysiloxan-Polyoxyalkylenpolysiloxan-Blockmischpolymerisaten, bei denen die Polysiloxanblöcke durch SiC-Bindungen an die Polyetherblöcke gebunden sind, welches dadurch gekennzeichnet ist, dass die Verbindungen oder deren Lösungen in Gegenwart einer Kombination aus Edelmetallkatalysatoren und säureaktivierten Trägermaterialien mit strömendem Wasserstoffgas behandelt werden.

Polyoxyalkylen-Polysiloxan-Blockmischpolymerisate oder Alkylpolysiloxan-Polyoxyalkylenpolysiloxan-Blockmischpolymerisate, bei denen die Polysiloxanblöcke durch SiC-Bindungen an die Polyetherblöcke gebunden sind, werden bevorzugt als Stabilisatoren bei der Herstellung von Polyurethanschäumen, als Emulgatoren, Trennmittel und als Wirkstoffe in kosmetischen Produkten eingesetzt.

Sie werden im Allgemeinen technisch durch Anlagerung von Alkenpolyethern, insbesondere Allylpolyethern, an Wasserstoffsiloxane in Gegenwart von Platinkatalysatoren hergestellt. Sie können beispielsweise folgender allgemeiner Formel entsprechen 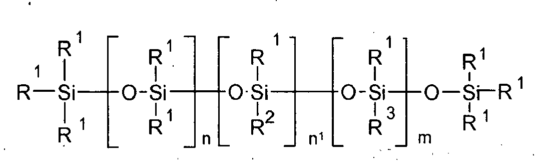 worin die Substituenten und Indices die folgende Bedeutung haben:
R¹ = Alkylrest, vorzugsweise Methylrest und/oder aromatischer Rest und/oder R³,
R² = Alkylrest mit 2 bis 20 Kohlenstoffatomen,
R³ = -(CH₂)₃-O-(C₂H₄O)ₓ-(C₃H₆O)_{y}-R⁴,
R⁴ = Wasserstoff- oder Alkylrest mit 1 bis 4 Kohlenstoffatomen,
n = 0 bis 150, vorzugsweise 1 bis 120,
n¹ = 0 bis 50, vorzugsweise 0 bis 40,
m = 0 bis 50, vorzugsweise 1 bis 40,
x = 1 bis 30, vorzugsweise 1 bis 25,
y = 0 bis 30, vorzugsweise 0 bis 25,
mit der Maßgabe, dass im Molekül mindestens ein Rest die Bedeutung R³ hat.

In der allgemeinen Formel können die Inkremente [ ]ₙ, [ ]ₙ¹, [ ]ₘ in statistischer Verteilung vorliegen oder blockweise angeordnet sein.

Bei den Herstellungsverfahren verwendet man in der Regel einen stöchiometrischen Überschuss von bis zu 40 % an Allylpolyethern, um zu gewährleisten, dass die SiH-Gruppen vollständig umgesetzt werden. Unter den Bedingungen der Anlagerung wird dabei ein Teil der Allylpolyether in die nicht anlagerungsfähigen Propenylpolyether umgelagert. Polyoxyalkylen-Polysiloxan-Blockmischpolymerisate oder Alkylpolysiloxan-Polyoxyalkylenpolysiloxan-Blockmischpolymerisate der vorgenannten Art enthalten somit im Allgemeinen Anteile an nicht umgesetzten Allylpolyethern und Propenylpolyethern.

Die Reaktionsmischungen besitzen einen mehr oder weniger stark ausgeprägten unangenehmen, stechenden Geruch, der sich häufig bei der Lagerung noch verstärkt. Dieser Geruch stört bei der Verwendung der Blockmischpolymerisate und insbesondere bei ihrer Verwendung als Wirkstoffe in kosmetischen Produkten oder Schaumstoffen/Schaumstoff-Formteilen für die Verwendung in Innenräumen.

Man hat bereits versucht, die geruchsbildenden Komponenten durch Ausblasen mit Inertgas oder durch Wasserdampfbehandlung zu entfernen. Es hat sich jedoch gezeigt, dass der Geruch nach Lagerung der Blockmischpolymerisate bzw. nach Einarbeitung in kosmetische Formulierungen wieder auftritt.
Mit der Entfernung dieser Geruchskomponenten befasst sich die EP-A-0 398 684. Dabei betrifft diese europäische Patentanmeldung ein gereinigtes Polyethersiloxan, welches in einem geschlossenen System während eines Zeitraumes von 24 Stunden mit 10⁻⁴ n wässriger Salzsäure in einer Menge von bis zu 1.000 ppm, bezogen auf Polyether, bei 60 °C behandelt worden ist. Das so gereinigte Produkt wird dann unter vermindertem Druck mit Wasserdampf behandelt, um die bei der Säurebehandlung gebildeten Aldehyde und Ketone zu entfernen.

Als nachteilig wurde jedoch gefunden, dass man zur Entfernung der gebildeten Aldehyde und Ketone, bezogen auf das Gewicht des behandelten Polyethersiloxans, die etwa 1,5fache Gewichtsmenge Wasserdampf benötigt. Man erhält deshalb dabei erhebliche Mengen eines übelriechenden, sauren Kondensats, welches schwierig zu entsorgen ist.

Ein weiterer Nachteil der Säurebehandlung besteht darin, dass, falls das Polyethersiloxan noch restliche SiH-Gruppen enthält, häufig die Bildung von Gelteilchen beobachtet wird. Diese Gelteilchen lassen sich durch Filtration nur schwierig entfernen.

Ein weiteres Verfahren zum Desodorieren von Polyoxyalkylen-Polysiloxan-Blockmischpolymerisaten kann der US-4 4 515 979 entnommen werden. Nach diesem Verfahren gibt man zu dem Blockmischpolymerisat während oder nach seiner Herstellung Phytinsäure zu. Bei der Phytinsäure handelt es sich um einen Hexaphosphatester des Myoinosits der allgemeinen Formel C₆H₁₈O₂₄P₆. Diese Verbindung ist ein natürlich vorkommendes und ungiftiges Naturprodukt, welches in Körnern und Samen vorkommt. Für einen technischen Einsatz ist dieses Produkt nicht zuletzt seines hohen Preises wegen ungeeignet.

Die EP-B-0 513 645 beschreibt ein Verfahren zum Desodorieren von Polyoxyalkylen-Polysiloxan-Blockmischpolymerisaten, bei denen die Polysiloxanblöcke durch SiC-Bindungen an die Polyetherblöcke gebunden sind, welches dadurch gekennzeichnet ist, dass man auf die Blockmischpolymerisate Wasserstoff in Gegenwart an sich bekannter Hydrierungskatalysatoren, gegebenenfalls unter Mitverwendung von 0,1 bis 1 Gew.-% einer sauren Tonerde und 0,1 bis 1 Gew.-% Wasser bei Temperaturen von 20 bis 200 °C und einem Druck von 1 bis 100 bar über einen Zeitraum von 0,5 bis 10 Stunden einwirken lässt.

Bei diesem Verfahren wird in geschlossenen Druckreaktoren, so genannten Autoklaven, gearbeitet. Hierbei wird lediglich verbrauchter Wasserstoff in dem Maße ersetzt, bis der vorgegebene Druck wieder erreicht ist.
Im Labormaßstab durchgeführte Verfahren lösen das Problem der Desodorierung und die Produkte bleiben auch über einen praxisgerechten Zeitraum klar und frei von Trübungen oder Sedimenten.

Bei der Durchführung im technischen Maßstab wurde jedoch gefunden, dass bei nach diesem beschriebenen Verfahren hergestellten Produkten nach einiger Lagerzeit bei Raumtemperatur, insbesondere aber bei Temperaturen darunter, Trübungen bis hin zur Sedimentbildung und Gelbfärbung auftreten können. Diese Veränderungen können mit einem Anstieg des Propionaldehydgehalts korreliert werden.

Aufgabe der vorliegenden Erfindung war es daher, ein Verfahren zu entwickeln, dass die Herstellung von farblosen und trübungsfreien Polyoxyalkylen-Polysiloxan-Blockmischpolymerisaten oder Alkylpolysiloxan-Polyoxyalkylenpolysiloxan-Blockmischpolymerisatenen im technischen Maßstab, d.h. im Bereich von a·10², vorzugsweise > a·10³ kg, wobei a ≥ 1, vorzugsweise ≥ 3 bis 10 ist, ermöglicht.

Gemäß der vorliegenden Erfindung gelingt dies dadurch, dass man die Polyoxyalkylen-Polysiloxan-Blockmischpolymerisate oder Alkylpolysiloxan-Polyoxyalkylenpolysiloxan-Blockmischpolymerisate oder deren Lösungen in Gegenwart einer Kombination aus an sich bekannter Hydrierungskatalysatoren und säureaktivierten Trägermaterialien mit strömendem Wasserstoffgas und gegebenenfalls einem inerten weiteren Gas, bei Temperaturen von 20 bis 200 °C und unter < Normaldruck über einen Zeitraum von 0,5 bis 10 Stunden behandelt. Vorzugsweise lässt man den Wasserstoff auf die Blockmischpolymerisate bei Temperaturen von 110 bis 140 °C einwirken.

Unter Normaldruck wird erfindungsgemäß der vor Ort herrschende Luftdruck verstanden. Aus verfahrenstechnischen Gründen kann dieser Druck auch unterschritten werden. Unter Normalbedingungen (auch STP genannt) wird erfindungsgemäß in einem Bereich von 80 kPa bis 101,6 kPa (von 800 mbar bis 1.016 mbar), vorzugsweise in einem Bereich von 90 kPa bis 101,6 kPa (von 900 mbar bis 1.016 mbar) gearbeitet.
Die Reaktion kann auch, falls gewünscht oder aus technischen Gründen erforderlich, bei noch geringeren Drücken durchgeführt werden, ohne dass die Produkteigenschaften beeinträchtigt werden.

Als Katalysatoren können aus dem Stand der Technik bekannte übliche Hydrierungskatalysatoren verwendet werden. Besonders geeignet sind dabei Nickel, Kupfer, Chrom oder die Metalle der Platingruppe. Dabei können die Katalysatoren auf einem geeigneten Träger niedergeschlagen sein. Besonders bevorzugt sind wegen ihres relativ niedrigen Preises, ihrer hohen Reaktivität und ihrer hohen Standzeiten Nickelkatalysatoren.

Man verwendet im Allgemeinen die Katalysatoren in einer Menge von 0,00001 bis 1 Gew.-% Metall, bezogen auf Polyethersiloxan.

Als säureaktivierte Trägermaterialien sind synthetische oder natürliche Stoffe verwendbar, solange sie keine unerwünschten Nebenreaktionen in den Reaktionsmedien bewirken. Dies können ein oder mehrere Materialien sein, ausgesucht aus der Gruppe der Aktivkohlen, Kieselgur, Kieselgel, Bentonite, Alumosilikate, Bleicherden, Tonerden, Montmorillonite, durch eine Säurebehandlung aktivierte Montmorillonite (z.B. die sog. K-Katalysatoren der Firma Süd-Chemie), polymeren Harze wie die sauren Ionenaustauscher insbesondere Zeolithe.

Die Mengen an säurebehandelten Trägermaterialien liegen im Bereich von 0,01 bis 0,06 Gew.-%, bevorzugt 0,025 bis 0,06 Gew.-% und besonders bevorzugt 0,04 bis 0,06 Gew,-%, bezogen auf Polyethersiloxan. Es ist aus verfahrensökonomischen Gründen vorteilhaft, die jeweils geringstmögliche Menge anhand einiger orientierender Versuche zu ermitteln.

Der Wasserstoff und das gegebenenfalls mitverwendete Inertgas werden über ein Tauchrohr dessen Ende z.B. perforiert ist oder in einer Fritte endet, eine Bodendüse oder über ein Düsensystem nach dem Stand der Technik zügig aber ohne erhöhten Druck eingeleitet.

Die Durchflussmengen liegen im Allgemeinen im Bereich von ca. 5.000 1 bis. ca. 15.000 1 Gas/h, bezogen auf Reaktorgrößen von 5 ± 2 m³, mit einem Wasserstoffanteil von vorzugsweise ca. 20 bis 40 Vol.-%.

Die mitverwendete Wassermenge liegt im Bereich von 0,1 bis 5 Gew.-%, bevorzugt im Bereich von 0,1 bis 3 Gew.-% und besonders bevorzugt im Bereich von 0,1 bis 2 Gew,-%, bezogen auf Polyethersiloxan.

In einer bevorzugten Ausführungsform des erfindungsgemäßen Verfahrens setzt man eine saure Tonerde ein und zusätzlich Wasser in Mengen von 0,1 bis 2 Gew.-% oder eine wässrige Pufferlösung mit einem pH-Wert von 3 bis 6. Als saure Tonerde kann z.B. mit Säure aktivierte Calciumbentonite oder Säure aktivierte Bleicherde eingesetzt werden. Als Pufferlösungen können wässrige Lösungen anorganischer und/oder organischer Säuren und Salze, die einen pH-Wert von 3 bis 6 besitzen, verwendet werden, wie z.B. ein Citronensäure-Phosphat-Puffer oder ein Citrat-Puffer nach Sörensen.

Das Inertgas, erfindungsgemäß vorzugsweise Stickstoff, kann vorher, danach oder gleichzeitig mit der Wasserstoffbehandlung eingeleitet werden. Erfindungsgemäß bevorzugt ist die schrittweise bzw. gleichzeitige Einleitung. Die Behandlungsdauer sollte bei geringen Anteilen an Wasserstoff in der Gasmischung durch orientierende Vorversuche ermittelt und entsprechend angepasst werden.

Es ist ebenfalls möglich, aber nicht zwingend erforderlich, der eigentlichen und erfindungswesentlichen Behandlung mit strömendem Wasserstoff die aus dem Stand der Technik bekannten Verfahrensschritte zur Grobreinigung vorzuschalten.

Nach erfolgter Einwirkung des Wasserstoffs auf die Polyoxyalkylen-Polysiloxan-Blockmischpolymerisate oder Alkylpolysiloxan-Polyoxyalkylenpolysiloxan-Blockmischpolymerisate können die Katalysatoren in geeigneter Weise, z.B. durch Filtration oder Zentrifugieren, von den Polyoxyalkylen-Polysiloxan-Blockmischpolymerisaten oder Alkylpolysiloxan-Polyoxyalkylenpolysiloxan-Blockmischpolymerisaten abgetrennt werden.

Da die Polyoxyalkylen-Polysiloxan-Blockmischpolymerisate oder Alkylpolysiloxan-Polyoxyalkylenpolysiloxan-Blockmischpolymerisate häufig Produkte mit einer höheren Viskosität sind, kann es zweckmäßig sein, die Hydrierung der Blockmischpolymerisate in Gegenwart geeigneter Lösungsmittel durchzuführen.

Die erfindungsgemäß behandelten, im technischen Maßstab hergestellten Polyoxyalkylen-Polysiloxan-Blockmischpolymerisate oder Alkylpolysiloxan-Polyoxyalkylenpolysiloxan-Blockmischpolymerisate sind frei von störenden Gerüchen und bleiben bei Lagerung bei erhöhten oder niedrigen Temperaturen oder nach Einarbeitung in kosmetische Formulierungen frei von den aus dem Stand der Technik bekannten unangenehmen und störenden Gerüchen.

Ein besonderer Vorteil des erfindungsgemäßen Verfahrens besteht darin, dass die behandelten Polyoxyalkylen-Polysiloxan-Blockmischpolymerisate oder Alkylpolysiloxan-Polyoxyalkylenpolysiloxan-Blockmischpolymerisate und ihre Lösungen nach Lagerung in einem breiten Temperaturbereich keine Verfärbungen, Trübungen und Sedimente aufweisen.

Das erfindungsgemäße Verfahren wird anhand der folgenden Beispiele noch näher erläutert.

Das in den Beispielen beschriebene Tonsil^{®} der Firma Süd-Chemie ist wie folgt charakterisiert:

Tonsil CO 614 G ist ein hochaktives saures Tongranulat mit einem breiten Anwendungsbereich. Es wird durch Säureaktivierung von Calciumbentonit hergestellt.

Tonsil CO 614 G ist ein Granulat mit einer hochporösen inneren Struktur und einer Vielzahl von aktiven Zentren.

Herstellung eines Alkylsiloxan-Polyethersiloxan-Copolymeren (Beispiel 5 aus der EP-B-1 520 870)

In einem Argon-inertisierten, mit KPG-Rührer, Tropftrichter und Rückflusskühler ausgestatteten Mehrhalskolben werden 60 g eines seitständige SiH-Gruppen tragenden Siloxans der mittleren Zusammensetzung MD₇₅(DH)₂₅M (SiH-Gehalt: 3, 6 Val/kg) mit 0,18 ml der in der EP-B-1 520 870 beschriebenen Katalysatorlösung (12 ppm Pt) bei 25 °C versetzt. Innerhalb von 18 Minuten werden 21 g Hexadecen zugetropft, so dass die Reaktionswärme die Ansatztemperatur auf 64 °C steigen lässt. Innerhalb von 10 Minuten werden dann 35,6 g eines Polyethers der mittleren Zusammensetzung CH₂=CH-CH₂O-(C₂H₄O)₈-OH (Jodzahl: 62 g Jod/100 g) zügig zugetropft, wobei die Reaktionstemperatur auf 50 °C sinkt. Nach beendeter Zugabe werden weitere 10,9 g Hexadecen innerhalb von 10 Minuten hinzugegeben. Gasvolumetrische SiH-Bestimmung an einer Probe des erkalteten Reaktionsansatzes belegt quantitativen Umsatz.

### Beispiel 1:

### Desodorierung mit Wasserstoff und Stickstoff

Bei ca. 90 °C gibt man zu 2.900 kg eines Alkylsiloxan-Polyethersiloxan-Copolymeren, hergestellt in Anlehnung an Beispiel 5 aus der EP-B-1 520 870, 1,8 kg Palladium auf Kohle, 1,4 kg Tonsil^{®} (Süd-Chemie AG) und 30 kg Wasser zu. Anschließend heizt man auf 120 °C auf und führt ca. 11.000 1 Wasserstoff/h über ein getauchtes Rohr zu, wobei in der Nähe des Normaldrucks, d.h. in einem Bereich von 95 kPa bis 100 kPa (950 mbar bis 1.000 mbar), gearbeitet wird.

Insgesamt lässt man 3 h Wasserstoff durch die intensiv gerührte Mischung strömen. Anschließend wird 1 h Stickstoff (ca. 7.000 1/h) über ein getauchtes Rohr geleitet. Die Reaktionsmischung wird danach bei 10 mbar und 140 °C innerhalb von 1 h von allen flüchtigen Bestandteilen befreit.

Durch eine Aufarbeitung nach den bekannten Methoden der Technik erhält man Produkt A (weitere Charakterisierungen s. Tabelle).

### Vergleichsbeispiel 1:

### Desodorierung mit Wasserstoff unter Druck

Bei ca. 90 °C gibt man zu ca. 3.950 kg eines Alkylsiloxan-Polyethersiloxan-Copolymeren, hergestellt in Anlehnung an Beispiel 5 aus der EP-B-1 520 870, 2,5 kg Palladium auf Kohle, 1,9 kg Tonsil und 26 kg Wasser zu. Anschließend heizt man auf 150 °C auf und führt Wasserstoff zu, so dass der Absolutdruck ca. 4 bar beträgt. Ein auftretender Druckabfall wird durch wiederholtes Angleichen des Überdruckes auf 4 bar ausgeglichen. Insgesamt wird 4 h bei erhöhtem Wasserstoffdruck und einer intensiven Durchmischung hydriert. Die Reaktionsmischung wird durch Entspannen auf Normaldruck (herrschender Außendruck) gebracht und anschließend bei 0,4 kPa (4 mbar) und 140 °C innerhalb von 1 h von allen flüchtigen Bestandteilen befreit.

Durch eine Aufarbeitung nach den bekannten Methoden der Technik erhält man Produkt B (weitere Charakterisierungen s. Tabelle).

### Vergleichsbeispiel 2:

### Desodorierung mit Stickstoff

Bei ca. 90 °C gibt man zu ca. 3.850 kg eines Alkylsiloxan-Polyethersiloxan-Copolymeren, hergestellt in Anlehnung an Beispiel 5 aus der EP-B-1 520 870, 2,5 kg Palladium auf Kohle, 1,9 kg Tonsil und 35 kg Wasser zu. Anschließend heizt man auf 130 °C auf und führt ca. 7.000 1/h Stickstoff über ein getauchtes Rohr zu, wobei in der Nähe des Normaldrucks, d.h. in einem Bereich von 95 kPa bis 101,6 kPa (950 mbar bis 1.016 mbar), gearbeitet wird.

Insgesamt wird 3 h Stickstoff durch die intensiv gerührte Mischung geleitet. Die Reaktionsmischung wird anschließend bei 0,4 kPa 4 mbar und 140 °C innerhalb von 1 h von allen flüchtigen Bestandteilen befreit.

Durch eine Aufarbeitung nach den bekannten Methoden der Technik erhält man Produkt C (weitere Charakterisierungen s. Tabelle).

**Tabelle:**

| Produkt | Beispiel | Aussehen (nach Lagerung) | Aussehen & Trübungswert (FTU³) nach Gefrier-/Hitze-Cyclen¹ | Propionaldehyd Gesamtgehalt² Ppm | Formaldehyde/ Acetaldehyd Gesamtgehalt² Ppm |
|---|---|---|---|---|---|
| A | Beispiel 1 | farblos klar(nach 9 Monaten Lagerung bei RT) | 0,753 klar | < 5 (nach < 9 Monaten Lagerung bei RT) | 5/< 5 |
| B | Vergleichsbeispiel 1 | gelb klar (nach 2 Monaten Lagerung bei RT) | 1,156 trüb | 15(nach < 2 Monaten Lagerung bei RT) | 5/< 5 |
| C | Vergleichsbeispiel 2 | farblos klar (nach 1 Monat Lagerung bei RT) | 0,643 klar | 55 (nach 1 Monat Lagerung bei RT) | 9/< 5 |

| | | | | | |
|---|---|---|---|---|---|
| ¹⁾ Gefriertemperatur: -18 °C und Hitzetemperatur: +90 °C (je 24 h Lagerung, dreimal im Wechsel) ²⁾ Ermittlung des Aldehyd-Gesamtgehalts nach einer Wasserdampfdestillation in saurer verdünnter wässriger Lösung (Apparatur v. Büchi K355) und anschließender Bestimmung nach Derivatisierung mit Dinitrophenylhydrazin mittels HPLC ³⁾ Trübungswert gemessen bei Raumtemperatur mit dem Gerät NEPHLA der Fa. Lange/Einheit ist FTU (Formazin Turbidity Units) | | | | | |

## Patentansprüche

1. Verfahren zum Aufbereiten von Polyoxyalkylen-Polysiloxan-Blockmischpolymerisaten oder Alkylpolysiloxan-Polyoxyalkylenpolysiloxan-Blockmischpolymerisaten, bei denen die Polysiloxanblöcke durch SiC-Bindungen an die Polyetherblöcke gebunden sind, **dadurch gekennzeichnet, dass** man die Polyoxyalkylen-Polysiloxan-Blockmischpolymerisate oder Alkylpolysiloxan-Polyoxyalkylenpolysiloxan-Blockmischpolymerisate oder deren Lösungen in Gegenwart einer Kombination aus an sich bekannten Hydrierungskatalysatoren und säureaktivierten Trägermaterialien und Wasser mit strömendem Wasserstoffgas und gegebenenfalls einem inerten weiteren Gas, bei Temperaturen von 20 bis 200 °C und Normaldruck über einen Zeitraum von 0,5 bis 10 Stunden behandelt und man als säureaktivierte Trägermaterialien Mengen im Bereich von 0,01 bis 0,06 Gew.-%, bezogen auf Polyethersiloxan verwendet.

2. Verfahren nach Anspruch 1, **dadurch gekennzeichnet, dass** man Wasserstoff bei Temperaturen von 110 bis 140 °C einwirken lässt.

3. Verfahren nach einem oder mehreren der vorhergehenden Ansprüche, **dadurch gekennzeichnet, dass** man als Katalysatoren für Hydrierungsreaktionen an sich bekannte Schwermetallkatalysatoren verwendet.

4. Verfahren nach Anspruch 3, **dadurch gekennzeichnet, dass** man als Katalysatoren Ni, Cu, Cr oder Metalle der Platingruppe in einer Menge von 0,00001 bis 1 Gew.-% Metall, bezogen auf Polyethersiloxan, verwendet.

5. Verfahren nach einem oder mehreren der vorhergehenden Ansprüche, **dadurch gekennzeichnet, dass** man als säureaktivierte Trägermaterialien eine saure Tonerde verwendet.

6. Verfahren nach einem oder mehreren der Ansprüche 1 bis 5, **dadurch gekennzeichnet, dass** man es in Gegenwart von Wasser mit einer Menge im Bereich von 0,1 bis 5 Gew.-%, bevorzugt im Bereich von 0,1 bis 3 Gew.-% und besonders bevorzugt im Bereich von 0,1 bis 2 Gew.-% bezogen auf Polyethersiloxan, durchführt.

7. Verfahren nach einem oder mehreren der Ansprüche 1 bis 6, **dadurch gekennzeichnet, dass** man es in Gegenwart von 0,1 bis 1 Gew.-% einer wässrigen Pufferlösung mit einem pH-Wert von 3 bis 6 durchführt.

8. Verfahren nach einem oder mehreren der Ansprüche 1 bis 7, **dadurch gekennzeichnet, dass** die Polyoxyalkylen-Polysiloxan-Blockmischpolymerisate oder Alkylpolysiloxan-Polyoxyalkylenpolysiloxan-Blockmischpolymerisate der allgemeinen Formel 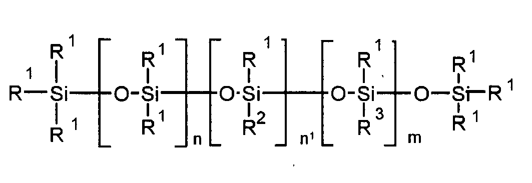 entsprechen, worin die Substituenten und Indices die folgende Bedeutung haben
R¹ = Alkylrest, vorzugsweise Methylrest, und/oder aromatischer Rest und/oder R³,
R² = Alkylrest mit 2 bis 20 Kohlenstoffatomen,
R³ = -(CH₂)₃-O-(C₂H₄O)ₓ-(C₃H₆O)_{y}-R⁴,
R⁴ = Wasserstoff- oder Alkylrest mit 1 bis 4 Kohlenstoffatomen,
n = 0 bis 150, vorzugsweise 1 bis 120,
n¹ = 0 bis 50, vorzugsweise 0 bis 40,
m = 0 bis 50, vorzugsweise 1 bis 40,
x = 1 bis 30, vorzugsweise 1 bis 25,
y = 0 bis 30, vorzugsweise 0 bis 25,
mit der Maßgabe, dass im Molekül mindestens ein Rest die Bedeutung R³ hat.

## Claims

1. Process for the treatment of polyoxyalkylenepolysiloxane block copolymers or alkylpolysiloxane-polyoxyalkylenepolysiloxane block copolymers in which the polysiloxane blocks are bonded to the polyether blocks by SiC bonds, **characterized in that** the polyoxyalkylenepolysiloxane block copolymers or alkylpolysiloxane-polyoxyalkylenepolysiloxane block copolymers or the solutions thereof are treated with flowing hydrogen gas and optionally a further inert gas in the presence of a combination of hydrogenation catalysts known per se and acid-activated carrier materials and water at temperatures of from 20 to 200°C and atmospheric pressure over a period of from 0.5 to 10 hours and amounts in the range of from 0.01 to 0.06% by weight, based on polyethersiloxane, are used as acid-activated carrier materials.

2. Process according to Claim 1, **characterized in that** hydrogen is allowed to act at temperatures of from 110 to 140°C.

3. Process according to one or more of the preceding claims, **characterized in that** the catalysts used are heavy metal catalysts known per se for hydrogenation reactions.

4. Process according to Claim 3, **characterized in that** Ni, Cu, Cr or metals of the platinum group are used in an amount of from 0.00001 to 1% by weight of metal, based on polyethersiloxane, as catalysts.

5. Process according to one or more of the preceding claims, **characterized in that** an acidic alumina is used as acid-activated carrier materials.

6. Process according to one or more of Claims 1 to 5, **characterized in that** it is carried out in the presence of water in an amount in the range of from 0.1 to 5% by weight, preferably in the range of from 0.1 to 3% by weight and particularly preferably in the range of from 0.1 to 2% by weight, based on polyethersiloxane.

7. Process according to one or more of Claims 1 to 6, **characterized in that** it is carried out in the presence of from 0.1 to 1% by weight of an aqueous buffer solution having a pH of from 3 to 6.

8. Process according to one or more of Claims 1 to 7, **characterized in that** the polyalkylenepolysiloxane block copolymers or alkylpolysiloxane-polyalkylenepolysiloxane block copolymers correspond to the general formula 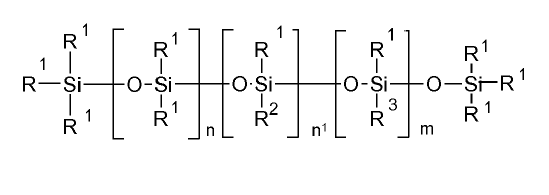 in which the substituents and indices have the following meaning:
R¹ =alkyl radical, preferably methyl radical and/or aromatic radical and/or R³,
R² =alkyl radical having 2 to 20 carbon atoms,
R³ (CH₂)₃-O-(C₂H₄O)ₓ-(C₃H₆O)_{y}-R⁴,
R⁴ =hydrogen or alkyl radical having 1 to 4 carbon atoms,
n = from 0 to 150, preferably from 1 to 120,
n¹ =from 0 to 50, preferably from 0 to 40,
m = from 0 to 50, preferably from 1 to 40,
x = from 1 to 30, preferably from 1 to 25,
y = from 0 to 30, preferably from 0 to 25,
with the proviso that at least one radical has the meaning R³ in the molecule.

## Revendications

1. Procédé de préparation de copolymères séquencés polyoxyalkylène-polysiloxane ou de copolymères séquencés alkylpolysiloxane-polyoxyalkylène-polysiloxane, les séquences polysiloxane étant reliées par des liaisons SiC aux séquences polyéther, **caractérisé en ce que** les copolymères séquencés polyoxyalkylène-polysiloxane ou les copolymères séquencés alkylpolysiloxane-polyoxyalkylène-polysiloxane ou leurs solutions sont traités, en présence d'une combinaison de catalyseurs d'hydrogénation connus en soi et de matériaux supports activés par un acide et d'eau, avec un courant d'hydrogène gazeux et éventuellement un autre gaz inerte, à des températures de 20 à 200 °C et à pression normale, pendant une durée de 0,5 à 10 heures, et des quantités dans la plage allant de 0,01 à 0,06 % en poids, par rapport au polyéthersiloxane, sont utilisées en tant que matériaux supports activés par un acide.

2. Procédé selon la revendication 1, **caractérisé en ce que** l'hydrogène est laissé agir à des températures de 110 à 140 °C.

3. Procédé selon une ou plusieurs des revendications précédentes, **caractérisé en ce que** des catalyseurs à base de métaux lourds connus en soi sont utilisés en tant que catalyseurs pour des réactions d'hydrogénation.

4. Procédé selon la revendication 3, **caractérisé en ce que** Ni, Cu, Cr ou des métaux du groupe du platine sont utilisés en tant que catalyseurs en une quantité de 0,00001 à 1 % en poids de métal, par rapport au polyéthersiloxane.

5. Procédé selon une ou plusieurs des revendications précédentes, **caractérisé en ce qu'**une alumine acide est utilisée en tant que matériaux supports activés par un acide.

6. Procédé selon une ou plusieurs des revendications 1 à 5, **caractérisé en ce qu'**il est réalisé en présence d'eau en une quantité dans la plage allant de 0,1 à 5 % en poids, de préférence dans la plage allant de 0,1 à 3 % en poids et de manière particulièrement préférée dans la plage allant de 0,1 à 2 % en poids, par rapport au polyéthersiloxane.

7. Procédé selon une ou plusieurs des revendications 1 à 6, **caractérisé en ce qu'**il est réalisé en présence de 0,1 à 1 % en poids d'une solution tampon aqueuse d'un pH de 3 à 6.

8. Procédé selon une ou plusieurs des revendications 1 à 7, **caractérisé en ce que** les copolymères séquencés polyoxyalkylène-polysiloxane ou les copolymères séquencés alkylpolysiloxanepolyoxyalkylène-polysiloxane correspondent à la formule générale 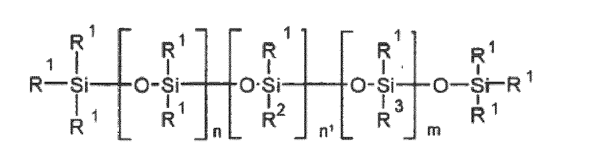 dans laquelle les substituants et les indices ont la signification suivants :
R¹ = radical alkyle, de préférence radical méthyle,
et/ou radical aromatique et/ou R³,
R² = radical alkyle contenant 2 à 20 atomes de carbone,
R³ = -(CH₂)₃-O-(C₂H₄O)ₓ-(C₃H₆O)_{y}-R⁴,
R⁴ = radical hydrogène ou alkyle contenant 1 à 4 atomes de carbone,
n = 0 à 150, de préférence 1 à 120,
n¹ = 0 à 50, de préférence 0 à 40,
m = 0 à 50, de préférence 1 à 40,
x = 1 à 30, de préférence 1 à 25,
y = 0 à 30, de préférence 0 à 25,
à condition qu'au moins un radical par molécule ait la signification de R³.
